# EUROPEAN PATENT APPLICATION

(11) **EP 4 694 228 A1**
(43) Date of publication of application: **11.02.2026**
(21) Application number: 23931236.6
(22) Date of filing: 03.04.2023
(51) Int. Cl.: H04W 4/70

(54) **COMMUNICATION METHOD, APPARATUS AND DEVICE, AND STORAGE MEDIUM**

(71) Applicant: Beijing Xiaomi Mobile Software Co., Ltd., Beijing 100085 (CN)
(72) Inventor: ZHAO, Wensu, Beijing 100085 (CN)
(74) Representative: Gunzelmann, Rainer
(86) International application number: PCT/CN2023/086042
(87) International publication number: WO 2024/207160

(57) **Abstract**

The present disclosure relates to a communication method, apparatus and device, and storage medium. The method comprises: a first user equipment transmitting a physical sidelink shared channel (PSSCH) to a second user equipment; determining N physical sidelink feedback channel (PSFCH) occasions for the PSSCH, wherein N is less than or equal to M, the value of M is the number of PSFCH occasions mapped by the PSSCH, and N and M are positive integers; and on the N PSFCH occasions, receiving and decoding hybrid automatic repeat request (HARQ) information transmitted by the second user equipment, and on an (N+1)th PSFCH occasion to an Mth PSFCH occasion, not receiving or decoding the HARQ information. Thus, the effect of reducing a PSSCH feedback delay is achieved.

## Description

### TECHNICAL FIELD

The disclosure relates to the field of communication technology, and in particular to a communication method, apparatus, device and storage medium.

### BACKGROUND

In a field of communications, a Physical Sidelink Share Channel (PSSCH) is often used to transmit data between terminals. During data transmission, through mapping of PSSCH to a physical sidelink feedback channel (PSFCH), each PSSCH is configured with at least one PSFCHs to feedback the hybrid automatic repeat request (HARQ) information corresponding to the PSSCH.

In a case where the HARQ information corresponding to the PSSCH is fed back, the LBT needs to be performed on different PSFCH occasions. After the LBT is successful, the HARQ information is sent. However, performing an HARQ feedback on a PSFCH occasion with a large time interval from the PSSCH will increase the feedback delay and a monitoring overhead of the terminal.

### SUMMARY

In order to overcome a problem existing in the related art, the disclosure provides communication methods, related apparatuses, related devices and a related storage medium.

According to a first aspect of an embodiment of the disclosure, a communication method performed by a first terminal is provided. The method includes:
sending a physical sidelink shared channel (PSSCH) to a second terminal; determining N physical sidelink feedback channel (PSFCH) occasions for the PSSCH among M (PSFCH) occasions, in which N is greater than or equal to 1 and less than or equal to M, a value of M is a number of PSFCH occasions mapped to the PSSCH, and N and M are positive integers; and receiving and decoding hybrid automatic repeat request (HARQ) information corresponding to the PSSCH sent by the second terminal on the N PSFCH occasions.

According to a second aspect of an embodiment of the disclosure, a communication method performed by a second terminal is provided. The method includes:
receiving physical sidelink shared channel (PSSCH) sent by a first terminal; determining N physical sidelink feedback channel (PSFCH) occasions for the PSSCH in M PSFCH occasions, in which N is greater than or equal to 1 and less than or equal to M, a value of M is a number of PSFCH occasions mapped to the PSSCH, and N and M are positive integers; and
performing listen-before-talk (LBT) on one or more of the N PSFCH occasions and sending hybrid automatic repeat request (HARQ) information corresponding to the PSSCH to the first terminal on a PSFCH occasion where the LBT is successfully performed.

According to a third aspect of an embodiment of the disclosure, a communication apparatus is provided. The communication apparatus includes:
a sending unit, configured to send physical sidelink shared channel (PSSCH) to a second terminal;
a processing unit, configured to determine N physic sidelink feedback channel (PSFCH) occasions for the PSSCH in M (PSFCH) occasions, in which N is greater than or equal to 1 and less than or equal to M, a value of M is a number of PSFCH occasions mapped to the PSSCH, and N and M are positive integers; and
a receiving unit, configured to receive and decode hybrid automatic repeat request (HARQ) information corresponding to the PSSCH sent by the second terminal on the N PSFCH occasions.

According to a fourth aspect of an embodiment of the disclosure, a communication apparatus is provided. The communication apparatus includes:
a receiving unit, configured to receive and decode physical sidelink shared channel (PSSCH) sent by a first terminal;
a processing unit, configured to determine N physical sidelink feedback channel (PSFCH) occasions for the PSSCH in M PSFCH occasions, in which N is greater than or equal to 1 and less than or equal to M, a value of M is a number of PSFCH occasions mapped to the PSSCH, and N and M are positive integers; and
a sending unit, configured to perform listen-before-talk (LBT) on one or more of the N PSFCH occasions and to send hybrid automatic repeat request (HARQ) information corresponding to the PSSCH to a first terminal on a PSFCH occasion where the LBT is successfully performed.

According to a fifth aspect of an embodiment of the disclosure, a communication device is provided. The communication device includes:
a processor and a memory configured to store instructions executable by the processor;
in which the processor is configured to perform the communication method of the first aspect.

According to a sixth aspect of an embodiment of the disclosure, a communication device is provided. The communication device includes:
a processor and a memory configured to store instructions executable by the processor,
in which the processor is configured to perform the communication method of the second aspect.

According to a seventh aspect of an embodiment of the disclosure, a storage medium having instructions stored therein is provided. When the instructions in the storage medium are executed by a processor of a first terminal, the first terminal is enabled to perform the communication method of the first aspect.

According to an eighth aspect of an embodiment of the disclosure, a storage medium having instructions stored thereon is provided. When the instructions in the storage medium are executed by a processor of a second terminal, the second terminal is enabled to perform the communication method of the second aspect.

It is to be understood that the foregoing general description and the following detailed description are illustrative and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1A is a schematic diagram illustrating an architecture of a wireless communication system according to an example embodiment.
FIG. 1B is a schematic diagram illustrating a timing diagram of a physical sidelink shared channel according to an example embodiment.
FIG. 2A is a schematic diagram illustrating an interaction of a communication method according to an example embodiment.
FIG. 2B is a schematic diagram illustrating a timing diagram of a physical sidelink shared channel according to an example embodiment.
FIG. 3A is a schematic flowchart illustrating a communication method performed by first user equipment according to an example embodiment.
FIG. 3B is a schematic flowchart illustrating a communication method performed by first user equipment according to an example embodiment.
FIG. 4A is a schematic flowchart illustrating a communication method performed by second user equipment according to an example embodiment.
FIG. 4B is a schematic flowchart illustrating a communication method performed by second user equipment according to an example embodiment.
FIG. 5A is a block diagram illustrating a communication device according to an example embodiment.
FIG. 5B is a block diagram illustrating a communication device according to an example embodiment.
FIG. 6A is a block diagram illustrating a communication device according to an example embodiment.
FIG. 6B is a block diagram illustrating a communication device according to an example embodiment.

### DETAILED DESCRIPTION

Here, example embodiments will be described in detail, examples of which are shown in the accompanying drawings. When the following description refers to the drawings, unless otherwise indicated, the same numbers in different drawings represent the same or similar elements. The implementations described in the following example embodiments do not represent all implementations consistent with the disclosure.

Embodiments of the disclosure provide communication methods, related apparatuses, related devices, and storage medium for reducing a feedback delay of user equipment (UE).

In a first aspect, embodiments of the disclosure provide a communication method performed by a first terminal. The method includes:
sending a physical sidelink shared channel (PSSCH) to a second terminal;
determining N physical sidelink feedback channel (PSFCH) occasions for the PSSCH in M PSFCH occasions, in which N is greater than or equal to 1 and less than or equal to M, a value of M is a number of PSFCH occasions mapped to the PSSCH, and N and M are positive integers; and
receiving and decoding hybrid automatic repeat request (HARQ) information corresponding to the PSSCH sent by the second terminal on the N PSFCH occasions.

In above embodiments, a part of the number of PSFCH occasions mapped to the PSSCH is selected to send the HARQ information. Compared with receiving the HARQ information on all the PSFCH occasions, receiving HARQ information on the selected part of the PSFCH occasions may realize data feedback more quickly, reduce a feedback delay, and reduce a resource overhead of the terminal.

In combination with some embodiments of the first aspect, in some embodiments, the time interval between any one of the N PSFCH occasions and the PSSCH is less than or equal to a time threshold.

In the above embodiments, by limiting a value range of the N PSFCH occasions by the time threshold, it may be ensured that the time intervals corresponding to the selected N PSFCH occasions are less than or equal to the time intervals corresponding to all PSFCH occasions, thereby reducing the information feedback delay.

In conjunction with some embodiments of the first aspect, in some embodiments, determining the N PSFCH occasions for the PSSCH in the M PSFCH occasions includes:
determining the N PSFCH occasions based on the time threshold and the M PSFCH occasions. The method includes determining all PSFCH occasions meeting a condition in the M PSFCH occasions as the N PSFCH occasions, in which the condition includes the time interval between the PSFCH occasion and the PSSCH channel being less than or equal to the time threshold.

In the above embodiments, by limiting a value range of the N PSFCH occasions by the time threshold, it may be ensured that the time intervals corresponding to the selected N PSFCH occasions are less than or equal to the time intervals corresponding to all PSFCH occasions, thereby reducing the information feedback delay.

In combination with some embodiments of the first aspect, in some embodiments, it is not expected to receive and decode the HARQ information sent by the second terminal on L PSFCH occasions, in which the L PSFCH occasions are one or more PSFCH occasions among the M PSFCH occasions except the N PSFCH occasions, and the L is greater than or equal to 1 and less than or equal to M.

In the above embodiments, receiving the HARQ information is not performed on the PSFCH occasion that does not meet a time threshold condition, thereby reducing the feedback delay of the UE.

In conjunction with some embodiments of the first aspect, in some embodiments, the time threshold is determined in one of following ways:
being predefined based on a resource pool;
being pre-configured based on a resource pool; or
being indicated based on downlink control information and/or sidelink control information.

In the above embodiment, the time threshold may be determined by setting a fixed value without an indication from a network (that is, the time threshold is pre-defined based on the resource pool), the time threshold may be defined based on an indication from a network under the network environment (that is, the time threshold is pre-configured based on the resource pool), or the time threshold is dynamically indicated based on downlink control information and/or sidelink control information. In this way, the time threshold may be set in different communication environments.

In combination with some embodiments of the first aspect, in some embodiments, a value of the time threshold is determined based on a priority of the PSSCH,
a first priority of the PSSCH corresponds to a first time threshold, a second priority of the PSSCH corresponds to a second time threshold, the first priority is higher than the second priority, and the first time threshold is less than the second time threshold.

In the above embodiments, by introducing a determination criterion based on the PSSCH priority to the time threshold, the PSSCH with a high priority may realize information feedback in a shorter time.

In a second aspect, embodiments of the disclosure provide a communication method performed by a second terminal. The method includes:
receiving a PSSCH sent by a first terminal;
determining N PSFCH occasions for the PSSCH in M PSFCH occasions, in which N is greater than or equal to 1 and less than or equal to M, a value of M is a number of PSFCH occasions mapped to the PSSCH, and N and M are positive integers;
performing LBT on one or more of the N PSFCH occasions, and sending HARQ information corresponding to the PSSCH to the first terminal on a PSFCH occasion where the LBT is successfully performed.

In the above embodiment, a part of the number of PSFCH occasions mapped to the PSSCH is selected to send the HARQ information. Compared with receiving the HARQ information on all the PSFCH occasions, receiving the HARQ information on a selected part of the PSFCH occasions may realize data feedback more quickly, thereby reducing a feedback delay and reducing a resource consumption of the terminal.

In combination with some embodiments of the second aspect, in some embodiments, the time interval between any one of the N PSFCH occasions and the PSSCH is less than or equal to a time threshold. In combination with some embodiments of the second aspect, in some embodiments, determining the N PSFCH occasions for the PSSCH in the M PSFCH occasions includes:
determining the N PSFCH occasions based on the time threshold, the M PSFCH occasions and the PSFCH occasion.

In combination with the embodiments of the second aspect, in some embodiments, HARQ information is not sent on the L PSFCH occasions, the L PSFCH occasions are one or more of the M PSFCH occasions except the N PSFCH occasions, the L is greater than or equal to 1 and less than or equal to M, and the L is a positive integer.

In conjunction with some embodiments of the second aspect, in some embodiments, the time threshold is determined in one of following ways:
being pre-defined based on a resource pool;
being pre-configured based on a resource pool; or
being indicated based on downlink control information and/or sidelink control information.

In combination with some embodiments of the second aspect, in some embodiments, a value of the time threshold is determined based on a priority of the PSSCH, a first priority of the PSSCH corresponds to a first time threshold, a second priority of the PSSCH corresponds to a second time threshold, the first priority is higher than the second priority, and the first time threshold is less than the second time threshold.

In a third aspect, an embodiment of the disclosure provides a communication apparatus, including:
a sending unit, configured to send a PSSCH to a second terminal;
a processing unit, configured to determine N PSFCH occasions for the PSSCH in M PSFCH occasions, in which N is greater than or equal to 1 and less than or equal to M, a value of M is a number of PSFCH occasions mapped to the PSSCH, and N and M are positive integers;
a receiving unit, configured to receive and decode HARQ information corresponding to the PSSCH sent by the second terminal on the N PSFCH occasions.

In combination with some embodiments of the third aspect, in some embodiments, the time interval between any one of the N PSFCH occasions and the PSSCH is less than or equal to a time threshold.

In conjunction with some embodiments of the third aspect, in some embodiments, determining the N PSFCH occasions for the PSSCH in the M PSFCH occasions includes:
determining the N PSFCH occasions based on the time threshold, the M PSFCH occasions and the PSFCH occasion.

In combination with some embodiments of the third aspect, in some embodiments, the processing unit is configured to not expect to receive and decode the HARQ information sent by the second terminal on L PSFCH occasions, in which the L PSFCH occasions are one or more PSFCH occasions among the M PSFCH occasions except the N PSFCH occasions, and L is greater than or equal to 1 and less than or equal to M.

In conjunction with some embodiments of the third aspect, in some embodiments, the processing unit is configured to determine a time threshold in one of following ways:
being predefined based on a resource pool;
being pre-configured based on a resource pool; or
being indicated based on downlink control information and/or sidelink control information.

In conjunction with some embodiments of the third aspect, in some embodiments, the processing unit is configured to determine the time threshold by: determining a value of the time threshold based on a priority of the PSSCH;
a first priority of the PSSCH corresponds to a first time threshold, a second priority of PSSCH corresponds to a second time threshold, the first priority is higher than the second priority, and the first time threshold is less than the second time threshold.

In a fourth aspect, an embodiment of the disclosure provides a communication apparatus, including:
a receiving unit, configured to receive and decode a PSSCH sent by a first terminal;
a processing unit, configured to determine N PSFCHs for the PSSCH in M PSFCH occasions, in which the N is greater than or equal to 1 and less than or equal to M, a value of M is a number of PSFCH occasions mapped to the PSSCH, a value of N is a number of PSFCH occasions usable by the PSSCH, and N and M are positive integers; and
a sending unit, configured to perform LBT on one or more of the N PSFCH occasions and send HARQ information corresponding to the PSSCH to the first terminal on a PSFCH occasion where the LBT is successfully performed. In combination with some embodiments of the fourth aspect, in some embodiments, the time interval between any one of the N PSFCH occasions and the PSSCH is less than or equal to a time threshold.

In conjunction with some embodiments of the fourth aspect, in some embodiments, determining the N PSFCH occasions for the PSSCH in the M PSFCH occasions includes:
determining the N PSFCH occasions based on the time threshold, the M PSFCH occasions and the PSFCH occasion.

In combination with some embodiments of the fourth aspect, in some embodiments, the HARQ information is not sent on L PSFCH occasions, in which the L PSFCH occasions are one or more PSFCH occasions among M PSFCH occasions except N PSFCH occasions, L is greater than or equal to 1 and less than or equal to M, and L is a positive integer.

In conjunction with some embodiments of the fourth aspect, in some embodiments, the processing unit is configured to determine the time threshold in one of following ways:
being pre-defined based on a resource pool;
being pre-configured based on a resource pool; or
being indicated based on downlink control information and/or sidelink control information.

In conjunction with some embodiments of the fourth aspect, in some embodiments, the processing unit is configured to determine the time threshold by determining a value of the time threshold based on a priority of the PSSCH;
a first priority of the PSSCH corresponds to a first time threshold, a second priority of the PSSCH corresponds to a second time threshold, the first priority is higher than the second priority, and the first time threshold is less than the second time threshold.

In a fifth aspect, an embodiment of the disclosure provides a communication device, including:
a processor and a memory configured to store instructions executable by the processor,
in which the processor is configured to perform the communication method of the first aspect or any one of the embodiments of the first aspect.

In a sixth aspect, an embodiment of the disclosure provides a communication device including:
a processor and a memory configured to store instructions executable by the processor,
in which the processor is configured to perform the communication method of the second aspect or any one embodiment of the second aspect.

In the seventh aspect, the disclosure provides a storage medium having instructions stored on, in which when the instruction stored in the storage medium are executed by a processor of a first terminal, the first terminal is caused to perform the communication method of the first aspect or any one embodiment of the first aspect.

In an eighth aspect, the disclosure provides a storage medium having instructions stored thereon, in which when the instructions in the storage medium are executed by a processor of a second terminal, the second terminal is caused to perform the communication method of the second aspect or any one embodiment of the second aspect.

It may be understood that the above communication apparatuses, the above communication devices, the above communication system and the above storage medium are all used for performing the methods according to the embodiments of the disclosure. Therefore, for the beneficial effects that may be achieved, reference may be made to the beneficial effects in the corresponding methods, which are not repeated here.

Embodiments of the disclosure provide communication methods, related devices and a related storage medium. In some embodiments, the "communication method," the "information processing method," the "communicating method" or the like may be used interchangeably with each other. The "communication device," the "information processing device" or the like may be used interchangeably with each other. The "information processing system," the "communication system" or the like may be used interchangeably with each other.

Embodiments of the disclosure are not exhaustive, but are merely illustrative of some embodiments, and are not intended to be a specific limitation on the scope of protection of the disclosure. Without the contradiction, each step in an embodiment may be implemented as an independent embodiment, and the steps may be combined arbitrarily. For example, a solution after removing some steps in an embodiment may also be implemented as an independent embodiment, and the order of the steps in an embodiment may be arbitrarily exchanged. In addition, the optional implementations in an embodiment may be combined arbitrarily. In addition, the embodiments may be combined arbitrarily. For example, some or all steps of different embodiments may be combined arbitrarily, and an embodiment may be combined arbitrarily with the optional implementations of other embodiments.

In each embodiment of the disclosure, in a case where there is no special explanation and logical conflict, the terms and/or descriptions between the embodiments are consistent and reference may be made to each other, and the technical features in different embodiments may be combined to form a new embodiment according to their inherent logical relationship. The terms used in the embodiments of the disclosure are only for the purpose of describing specific embodiments, and are not intended to limit the disclosure.

In the embodiments of the disclosure, unless otherwise specified, elements expressed in the singular form, such as "a," "an," "the," "above," "said," "aforementioned," "this" or the like may mean "one and only one," "one or more," "at least one" or the like. For example, when using articles such as "a," "an," "the"" in English translation, the noun after the article may be understood as a singular expression or a plural expression.

In the embodiments of the disclosure, "a of plurality" refers to two or more.

In some embodiments, the terms "at least one of," "one or more," "a plurality of," "multiple" or the like may be used interchangeably.

In the embodiments of the disclosure, descriptions such as "at least one of A, B, C..." or "A and/or B and/or C..." include a situation where any one of A, B, C... exists alone, a situation where any multiple of A, B, C... exist in any combination, and a situation where each of A, B, C... exists alone; for example, "at least one of A, B, C" includes the situation where A exists alone, B exists alone, C exists alone, the combination of A and B, the combination of A and C, the combination of B and C, and the combination of A, B and C. For example, A and/or B includes the situation where A exists alone, B exists alone, and the combination of A and B.

In some embodiments, the descriptions such as "performing A in one case, and performing B in another case", "performing A in response to one case, and performing B in response to another case B" may include the following technical solutions according to the situation: performing A independently of B (that is, in some embodiments performing A), performing B independently of A (that is, in some embodiments performing B), selectively performing A and B (that is, selectively selecting A and B in some embodiments), and performing both A and B (that is, performing both A and B in some embodiments). When there are more branches such as A, B, C, etc., it is similar to the above.

The prefixes such as "first" and "second" in the embodiments of the disclosure are only used to distinguish different described objects, and are not used as restrictions on the position, order, priority, quantity or content of the described objects. The statement of the described object refers to the description in the context of the claims or embodiments, and should not constitute unnecessary restrictions due to the use of prefixes. For example, if the described object is a "field", the ordinal number before the "field" in "the first field" and "the second field" does not limit the position or order between the fields, and the "first" and "second" are not used to have a limitation on whether the fields modified by these terms are in the same message, nor are they used to have a limitation on the order of "the first field" and "the second field". As another example, if the described object is a "level", the ordinal number before the "level" in "the first level" and "the second level" does not limit the priority between the levels. As another example, the number of described objects is not limited by the ordinal number and may be one or more. Taking "the first device" as an example, the number of devices may be one or more. In addition, the objects modified by different prefixes may be the same or different. For example, if the described object is a "device," "the first device" and "the second device" may be the same device or different devices, and their types may be the same or different. As another example, if the described object is "information," "the first information" and "the second information" may be the same information or different information, and their contents may be the same or different.

In some embodiments, "including A," "containing A," "configured to indicate A," and "carrying A" may be interpreted as directly "carrying A" or "indirectly indicating A".

In some embodiments, terms such as "in response to," "in response to determining," "in a case where," "at," "when," "if" and so on may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably. Terms such as "smaller than," "smaller than or equal to," "not greater than," "less than," "less than or equal to," "not more than," "lower than," "lower than or equal to," "not higher than," and "below" may be used interchangeably.

In some embodiments, an apparatus may be interpreted as physical or virtual, and its name is not limited to the names mentioned in the embodiments, such as "apparatus," "equipment," "device," "circuit," "network element," "node," "function," "unit," "section," "system," "network," "chip," "chip system," "entity," and "subject," which may be used interchangeably.

In some embodiments, the following terms may be used interchangeably: "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "carrier," "component carrier," "bandwidth part (BWP)" and so on.

In some embodiments, the following terms may be used interchangeably: "terminal," "terminal device," "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client "and so on.

In some embodiments, the access network device, the core network device, or the network device may be replaced by a terminal. For example, the communication between the access network device, the core network device or the network device and the terminal is replaced by a structure of the communication between multiple terminals (for example, also referred to as device-to-device (D2D), vehicle-to-everything (V2X), or the like), or may use various embodiments of the disclosure. In this case, it may also be set as a structure in which the terminal has all or part of the functions of the access network device. In addition, terms such as "uplink" and "downlink" may also be replaced by terms corresponding to the communication between terminals (for example, "side"). For example, "uplink channel", "downlink channel" or the like may be replaced by "side channel", and "uplink," "downlink" or the like may be replaced by "sidelink".

In some embodiments, the terminal may be replaced by an access network device, a core network device or a network device. In this case, the access network device, the core network device or the network device may also be configured to have a structure that has all or part of the functions of the terminal.

In some embodiments, the name of information is not limited to names mentioned in the embodiments. The following terms may be used interchangeably: "information," "message," "signal," "signaling," "report," "configuration," "indication," "instruction," "command," "channel," "parameter, domain," "field," "symbol," "code element/symbol," "codebook," "codeword," "codepoint," "bit," "data," "program," "chip" and so on.

In some embodiments, terms such as "uplink," "up-link" and "physical uplink" may be used interchangeably. Terms such as "downlink," "down-link"and "physical downlink" may be used interchangeably. Terms such as "side," "sidelink," "side communication," "sidelink communication," "direct connection," "direct link," "direct communication" and "direct link communication" may be used interchangeably.

In some embodiments, terms such as "downlink control information (DCI)," "downlink (DL) assignment," "DL DCI," "uplink (UL) grant," and "UL DCI" may be used interchangeably.

In some embodiments, terms such as "physical downlink shared channel (PDSCH)," "L data" and the like may be used interchangeably, and terms such as "physical uplink shared channel (PUSCH)," "UL data" and the like may be used interchangeably.

In some embodiments, the terms "radio," "wireless," "radio access network (RAN)," "access network (AN)," "RAN-based" and the like may be used interchangeably.

In some embodiments, terms such as "search space," "search space set," "search space configuration," "search space set configuration," "control resource set (CORESET)" and "CORESET configuration" may be used interchangeably.

In some embodiments, terms such as "synchronization signal (SS)," "synchronization signal block (SSB)," "reference signal (RS)," "pilot," and "pilot signal" may be used interchangeably.

In some embodiments, the terms "component carrier (CC)," "cell," "frequency carrier," "carrier frequency" and the like may be used interchangeably.

In some embodiments, terms such as "resource block (RB)," "physical resource block (PRB)," "sub-carrier group (SCG)," "resource element group (REG)," "PRB pair," "RB pair" and "resource element (RE)" may be used interchangeably.

In some embodiments, terms such as "wireless access scheme" and "waveform" may be used interchangeably.

In some embodiments, terms such as "precoding," "precoder," "weight," "precoding weight," "quasi-co-location (QCL)," "transmission configuration indication (TCI) state," "spatial relation," "spatial domain filter," "transmission power," "phase rotation," "antenna port," "antenna port group," "layer," "the number of layers," "rank," "resource," "resource set," "resource group," "beam," "beam width," "beam angular degree," "antenna," "antenna element" and "panel" may be used interchangeably.

In some embodiments, terms such as "frame," "radio frame," "subframe," "slot," "sub-slot," "mini-slot", "symbol," "symbol" and "transmission time interval (TTI)" may be used interchangeably.

In some embodiments, terms "obtain," "acquire," "get," "receive," "transmit," "send" and/or "receive" may be interchangeable, which may be interpreted as receiving from other entities, obtaining from a protocol, obtaining by self-processing, autonomous implementation, etc.

In some embodiments, terms such as "sending," "reporting," "issuing," "transmitting," "sending" and/or "receiving" may be used interchangeably.

In some embodiments, "reservation" and "preset" may be interpreted as "pre-regulated" in a protocol or may be interpreted as a "preset action" performed by an apparatus.

In some embodiments, determining can be interpreted as, but is not limited to, estimating, deciding, judging, calculating, computing, processing, deriving, investigating, searching for, looking up, search, inquiry, ascertaining, receiving, transmitting, input, output, accessing, resolving, selecting, choosing, establishing, comparing, assuming, expecting, considering, broadcasting, notifying, communicating, forwarding, configuring, reconfiguring, allocating, mapping, assigning, or the like.

In some embodiments, the "judging" or "estimating" may be represented as, but is not limited to, a value (such as 0 or 1) of 1 bit, as a true value or a false value (Boolean value), or as a comparison of numerical values (for example, comparison with a predetermined value).

In some embodiments, the "network" may be interpreted as devices included in the network (e.g., access network device, core network device or the like).

In some embodiments, "not expecting to receive" may be interpreted as not receiving on time domain resources and/or frequency domain resources, or as not performing any subsequent processing on the data after receiving the data. "Not expecting to send" may be interpreted as not sending, or as sending but not expecting the recipient to respond to the sent content.

In some embodiments, the acquisition of data, information or the like may comply with the laws and regulations of the country where the data is obtained.

In some embodiments, data, information or the like may be obtained with the user's consent.

In addition, each element, each row or each column in the table of the embodiments of the disclosure may be implemented as an independent embodiment, and the combination of any elements, any rows or any columns may also be implemented as an independent embodiment.

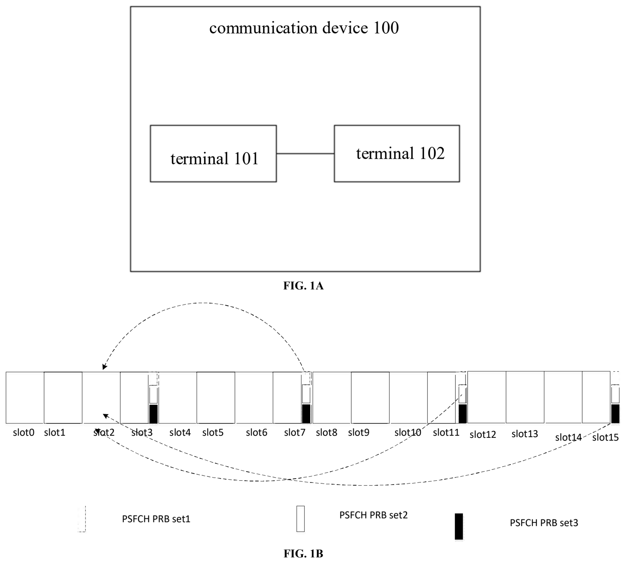

FIG. 1A is a schematic diagram illustrating a communication device according to embodiments of the disclosure. As illustrated in FIG. 1A, a communication system 100 includes a terminal 101 and a terminal 102. The terminal 101 includes, but is not limited to, for example, at least one of a mobile phone, a wearable device, an internet of things device, a vehicle with communication function, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home.

The terminal 102 includes, for example, at least one of a mobile phone, a wearable device, an Internet of Things device, a vehicle with communication function, a smart vehicle, a tablet computer, a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home. The disclosure is not limited to the above.

It may be understood that the communication system described in the embodiments of the disclosure is for the purpose of more clearly illustrating the technical solutions of the embodiments of the disclosure, and does not constitute a limitation on the technical solutions of the embodiments of the disclosure. A person skilled in the art may know that with the evolution of the system architecture and the emergence of new business scenarios, the technical solutions of the embodiments of the disclosure are also applicable to similar technical problems.

The following embodiments of the disclosure may be applied to the communication system 100 illustrated in FIG. 1A or part of the subject, but the disclosure are not limited to the above. The subjects illustrated in FIG. 1A are examples, and the communication system may include all or some of the subjects in FIG. 1A or may include other subjects other than FIG. 1A. The number and form of the subjects are arbitrary, and the connection relationship between the subjects is an example. For example, the subjects may be connected or disconnected, and the connection may be in any manner, which may be a direct connection or an indirect connection and may be a wired connection or a wireless connection.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSMTM), CDMA2000, Ultra Mobile Broadband (UMB), IEEE 802.11 (Wi-FiTM), IEEE 802.16 (WiMAXTM), IEEE 802.20, Ultra-WideBand (UWB), BluetoothTM, Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems may also be combined (for example, a combination of LTE or LTE-A and 5G, etc.) for application. In the embodiments of the disclosure, the Physical Sidelink Control Channel (PSCCH) and the Physical Sidelink Shared Channel (PSSCH) are generally used to transmit data between terminals (also called UE).

In some embodiments of the disclosure, 1 PSSCH is mapped to M candidate physical sidelink feedback channel (PSFCH) occasions (where 1 <M, and M is an integer). Based on the one-to-many mapping, the same number of M PSFCH occasions are mapped to all PSSCHs, that is, each PSSCH is configured with the M PSFCH occasions. However, not all PSSCHs require the same number of PSFCH occasions. Assuming that 3 PSFCH occasions are mapped to the PSSCH sent by the terminal, and that every two PSFCH occasions are separated by 4 slots, using a last PSFCH occasion will result in a larger feedback delay.

Take the PSSCH as an example, FIG. 1B is a schematic diagram illustrating PSSCH timing. As illustrated in FIG. 1B, 1 PSSCH supports 3 PSFCH occasions, for example 3 PSFCH occasions correspond to the PSSCH of a slot 2, including a PSFCH occasion in a slot 7, a PSFCH occasion in a slot 11, and a PSFCH occasion in a slot 15. For the PSSCH of a slot 2, in a case where the LBT fails on the PSFCH occasions of the slot 7 and of the slot 11, while the LBT succeeds on the PSFCH occasion of the slot 15, the PSFCH of the slot 15 is used for HARQ feedback. At this time, the PSSCH is separated from the corresponding PSFCH occasion by 13 slots, which will cause a large feedback delay.

In view of this, embodiments of the disclosure provide communication methods, such that the number of PSFCH occasions is determined by a time threshold to use some of the PSFCH occasions mapped to the PSSCH, thereby reducing the feedback delay.

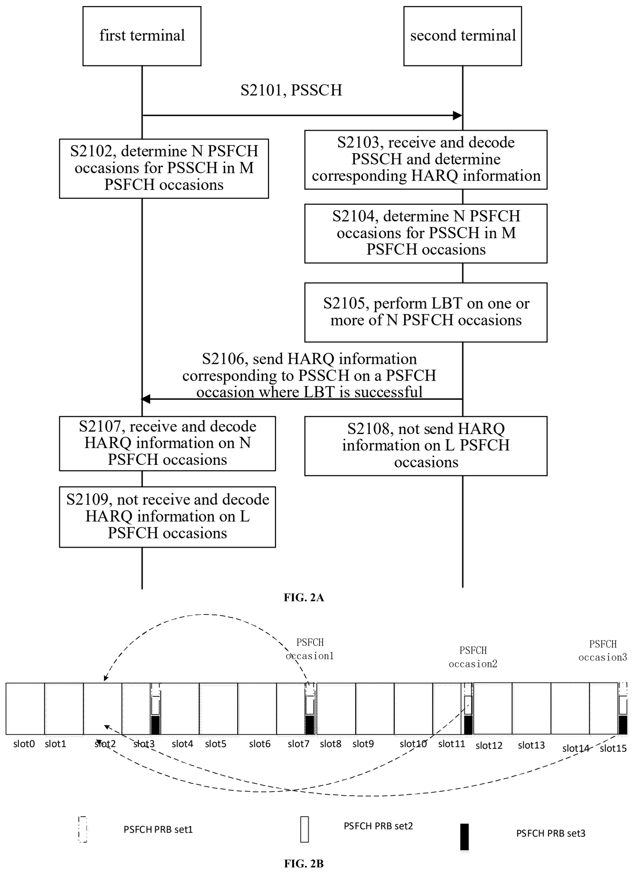

FIG. 2A is a schematic diagram illustrating an interaction of a communication method according to an example embodiment. As illustrated in FIG. 2A, embodiments of the disclosure relate to a communication method performed by a communication system 100. The method includes the following.

At step S2101, a first terminal sends a PSSCH.

In some embodiments, the PSSCH is sent by the first terminal to a second terminal.

In some embodiments, the PSSCH is mapped to M PSFCH occasions, where M is a positive integer.

For example, continuing with the example illustrated in FIG. 1B, it is determined that a maximum number of PSFCH occasions mapped to the PSSCH is 3, that is, M is equal to 3.

At step S2102, the first terminal determines N PSFCH occasions for the PSSCH among M PSFCH occasions.

In some embodiments, based on a time interval between any one of the N PSFCH occasions and the PSSCH being less than or equal to the time threshold, the N PSFCH occasions are determined for the PSSCH among the M PSFCH occasions.

In some embodiments, determining the N PSFCH occasions for the PSSCH among the M PSFCH occasions includes determining the N PSFCH occasions based on the time threshold, the M PSFCH occasions and the PSFCH occasion.

In some embodiments, the first terminal determines the N PSFCH occasions for the PSSCH, where N is less than or equal to M, a value of M is the number of PSFCH occasions mapped to the PSSCH channel, and N and M are positive integers. For example, in the above example, if M is 3, then N is less than or equal to 3, that is, a value range of N may only be 1, 2 or 3.

In some embodiments, N is determined based on the time threshold, and the time interval between the PSSCH channel and a determined N^{th} PSFCH occasion is less than or equal to the time threshold.

In some embodiments, a time unit corresponding to the time threshold includes: symbol, slot, or subslot.

In some embodiments, the time threshold is determined in one of following ways: being pre-defined based on a resource pool, being pre-configured based on a resource pool, or being indicated based on downlink control information (DCI) and/or sidelink control information (SCI).

In one implementation, the time threshold may be predefined by the first terminal through a preset resource pool. For example, the first terminal may set the time threshold to a fixed value based on the resource pool. For example, the fixed time threshold is 5 slots.

In another implementation, the time threshold may also be pre-configured by the network device through a preset resource pool. For example, the time threshold is preconfigured based on Radio Resource Control (RRC). For example, the time threshold is configured as 5 slots through the RRC.

In another implementation, the network device indicates the time threshold through a DCI or the second terminal indicates the time threshold through an SCI, and the setting of the time threshold is indicated through dynamic scheduling. For example, 5 slots are dynamically indicated through the DCI as the time threshold.

It should be understood that the above-mentioned method for determining the time threshold is only used to illustrate the setting of the time threshold. A specified value may be set in the absence of network, and dynamic indication data may be scheduled and obtained based on the network standard or a corresponding control signaling when a network is available. However, this does not mean that it may only be implemented through the above-mentioned methods.

In some embodiments, the value of the time threshold is determined based on a priority of the PSSCH. The higher the priority, the smaller the value of the time threshold, and the lower the priority, the larger the value of the time threshold.

There may be multiple different priorities of the PSSCH. Any two different priorities among the multiple different priorities are referred to as a first priority and a second priority. Different priorities correspond to different time thresholds. Any two different time thresholds are referred to as a first time threshold and a second time threshold.

The first priority of PSSCH corresponds to the first time threshold, the second priority of PSSCH corresponds to the second time threshold, the first priority is higher than the second priority, and the first time threshold is less than the second time threshold.

For example, supposing there are two PSSCHs with different priorities, namely the first PSSCH and the second PSSCH. The priority of the data transmitted corresponding to the first PSSCH is the first priority, and the priority of the data transmitted corresponding to the second PSSCH is the second priority. In a preset information sending rule, the priorities corresponding to the two types of data are sorted from high to low as: the first priority and then the second priority. Based on this priority sorting relationship, it is defined that the time threshold corresponding to the first PSSCH is less than the time threshold corresponding to the second PSSCH. As another example, in the preset information sending rule, the priorities corresponding to the two types of data are sorted from low to high as: first priority and second priority. Based on this priority sorting relationship, it is defined that the time threshold corresponding to the first PSSCH is greater than the time threshold corresponding to the second PSSCH.

Further, the priority corresponding to the data in the PSSCH may be indicated by the SCI.

At step S2103, the PSSCH is received and decoded, and corresponding HARQ information is determined.

In some embodiments, the second terminal receives the PSSCH from the first terminal and decodes and determines HARQ information corresponding to the PSSCH.

For example, the second terminal receives the PSSCH from the first terminal. The first terminal establishes the PSSCH with the second terminal. Depending on the actual usage requirements and the retransmission content, the PSSCH may correspond to the following three types of HARQ transmission mechanisms, including: information corresponding to HARQ-I type, information corresponding to HARQ-II type, and information corresponding to HARQ-III type. Therefore, the second terminal may receive and decode any of the above three types of information.

In some embodiments, the PSSCH supports a HARQ ACK/NACK feedback mode. For example, in a case where the second terminal correctly decodes and receives the PSSCH, the HARQ information corresponds to the ACK information, and in a case where the second terminal cannot correctly decode the PSSCH, the HARQ information corresponds to the NACK information.

At step S2104, the second terminal determines N PSFCH occasions for the PSSCH from the M PSFCH occasions.

In some embodiments, based on the time interval between any one of the N PSFCH occasions and the PSSCH being less than or equal to the time threshold, the N PSFCH occasions are determined for the PSSCH from the M PSFCH occasions.

In some embodiments, determining the N PSFCH occasions for the PSSCH from the M PSFCH occasions includes: determining the N PSFCH occasions based on the time threshold, the M PSFCH occasions and the PSFCH occasion.

In some embodiments, N is less than or equal to M, a value of M is the number of PSFCH occasions mapped to the PSSCH channel, and N and M are positive integers. For example, in the above example, M is 3, then N is less than or equal to 3, that is, a value range of N may only be 1, 2 or 3.

The N PSFCH occasions are all PSFCH occasions that meet a condition among the M PSFCH occasions, and the condition includes: the time interval between the PSFCH occasion and the PSSCH channel being less than or equal to a time threshold.

The determination of the time threshold is the same as the way in which the first terminal determines the time threshold in the above example, and will not be described in detail here.

At step S2105, listen before talk (LBT) is performed on one or more of the N PSFCH occasions.

In some embodiments, the second terminal performs the LBT on one or more PSFCH occasions among the N PSFCH occasions.

In some embodiments, the second terminal performs the LBT on the N PSFCH occasions.

It is understandable that all PSFCH occasions are mapped to the PSSCH.

For example, in a case where the maximum number of PSFCH occasions mapped to the PSSCH is 3 (i.e., M is equal to 3) and N is 2, one or both PSFCH occasions of the first two of the PSFCH occasions that are arranged based on a time sequence may be selected to perform the LBT.

In some embodiments, in a case where the second terminal sends the HARQ information on the location of the first PSFCH occasion in which the LBT is successfully performed among the N PSFCH occasions, the LBT is not performed on the remaining PSFCH occasions.

For example, in a case where the LBT is successfully performed on the first PSFCH occasion arranged based on a time sequence, the LBT is not performed on the PSFCH occasions that are the second one and the third one of the PSFCH occasions arranged based on a time sequence.

At step S2106, the second terminal sends the HARQ information corresponding to the PSSCH to the first terminal on the PSFCH occasion where the LBT is successful.

At step S2107, the first terminal receives and decodes the HARQ information sent by the second terminal on the N PSFCH occasions.

In some embodiments, the second terminal sends the HARQ information to the first terminal on a PSFCH occasion in which the LBT is successfully performed.

For example, in a case where the second terminal successfully performs the LBT on the second PSFCH occasion arranged based on a time sequence, the second terminal sends the corresponding HARQ information to the first terminal on a corresponding PSFCH occasion.

Performing the LBT on one or more PSFCH occasions among the N PSFCH occasions and sending the HARQ information corresponding to the PSSCH to the first terminal on the PSFCH occasion where the LBT is successfully performed include two implementation modes A and B as follows.

A: On the N PSFCH occasions, the receiving UE sends the HARQ information corresponding to the PSSCH to the first terminal on all PSFCH occasions where the LBT is successfully performed.

In an example, in a case of N=3, the receiving UE performs the LBT on all three PSFCH occasions. In a case where the LBT fails on the first PSFCH occasion and the LBT succeeds on the second and third PSFCH occasions, the HARQ information corresponding to the PSSCH is sent to the first terminal pn the second and third PSFCH occasions.

B: On the N PSFCH occasions, the receiving UE sends the HARQ information corresponding to the PSSCH to the first terminal only on the first PSFCH occasion where the LBT succeeds. In a case where there are remaining PSFCH occasions, the receiving UE does not perform the LBT on the remaining PSFCH occasions.

In an example, in a case where N=3, the receiving UE performs the LBT on the first PSFCH occasion and the LBT fails, then the receiving UE performs the LBT on the second PSFCH occasion and the LBT succeeds, and thus the receiving UE only sends the HARQ information corresponding to the PSSCH to the first terminal on a PSFCH occasion where the LBT is successfully performed at a first time. That is, the HARQ information corresponding to the PSSCH is sent to the first terminal on the second PSFCH occasion and the LBT is performed on the third PSFCH occasion.

At step S2108, the second terminal does not send the HARQ information on L PSFCH occasions.

At step S2109, the first terminal does not receive and decode the HARQ information sent by the second terminal on the L PSFCH occasions.

The L PSFCH occasions are one or more PSFCH occasions other than the N PSFCH occasions among the M PSFCH occasions, where L is greater than or equal to 1 and less than or equal to M, and L is a positive integer.

For example, the LBT is performed on one or more PSFCH occasions among the N PSFCH occasions, and the PSFCH is sent to the first terminal on all PSFCH occasions where the LBT is successfully performed. In a case where N is 3, the LBT is performed only on all the first three PSFCH occasions arranged in a time sequence to determine the PSFCH occasions where the PSSCH channel is usable. In a case where the LBT is successfully performed on the first, second and third PSFCH occasions, the HARQ information corresponding to the PSSCH is sent to the first terminal on the first, second and third PSFCH occasions.

It should be understood that in the above communication interaction methods, the first terminal and the second terminal are the execution subjects, and the execution actions are performed in no particular order during the data transmission process. The first terminal may send data firstly, the second terminal may enter a receiving state firstly, or the first terminal and the second terminal may send and receive at the same time.

For example, the LBT is performed on one or more PSFCH occasions among the N PSFCH occasions, and the PSFCH is sent to the first terminal on all PSFCH occasions where the LBT is successfully performed. In a case where N is 3, the LBT is performed only on all first three PSFCH occasions arranged based on a time sequence to determine the PSFCH occasions where the PSSCH channel is usable. In a case where the LBT fails on the first PSFCH occasion and the LBT is performed successfully on the second and third PSFCH occasions, the HARQ information corresponding to the PSSCH is sent to the first terminal on both of the second and third PSFCH occasions.

For example, in a case where the LBT is performed on one or more PSFCH occasions among the N PSFCH occasions, and the PSFCH is sent to the first terminal on PSFCH occasion(s) where the LBT is successfully performed, when N is 3, the LBT is performed only on all first three PSFCH occasions arranged based on a time sequence to determine the PSFCH occasion(s) where the PSSCH channel is usable. In a case where the LBT is successful on the first PSFCH occasion, the HARQ information is sent to the terminal only on the first PSFCH occasion, and the LBT is not performed on the remaining second and third PSFCH occasions.

Further, in a case where the LBT is performed on one or more PSFCH occasions among the N PSFCH occasions, and the PSFCH is sent to the first terminal on all PSFCH occasions where the LBT succeeds, when N is 3, the LBT is performed only on all of the first three PSFCH occasions arranged based on the time sequence to determine the PSFCH occasions where the PSSCH channel is usable. In a case where the LBT fails on the first PSFCH occasion and the LBT is successfully performed on the second PSFCH occasion, the HARQ information is sent to the terminal only on the second PSFCH occasion, and the LBT is not performed on the remaining third PSFCH occasion.

In determining the N PSFCH occasions for the PSSCH among the M PSFCH occasions, the N PSFCH occasions are determined based on the time threshold, and the time interval between the PSSCH channel and each of the determined N PSFCH occasions is less than or equal to the time threshold. The HARQ information corresponding to the PSSCH sent by the second terminal is received and decoded on the N PSFCH occasions. The HARQ information is not received and decoded sent by the second terminal on the L PSFCH occasions, the L PSFCH occasions are one or more PSFCH occasions other than the N PSFCH occasions among the M PSFCH occasions, and the L is greater than or equal to 1 and less than or equal to M.

Taking the PSSCH as an example, as illustrated in FIG. 2B, FIG. 2B is a schematic diagram illustrating PSSCH timing. It may be found in FIG. 2B that, for the PSSCH in the slot 2, each PSSCH supports at most M PSFCH occasions, when, for example, M is equal to 3 and the time threshold is 10 slots, the corresponding PSFCH occasions include a PSFCH occasion of a slot 7 in the time domain and of an RB set 1 in the frequency domain, a PSFCH occasion of a slot 11 in the time domain and of an RB set 2 in the frequency domain, and a PSFCH occasion of a slot 15 in the time domain and of an RB set 3 in the frequency domain. The time threshold L is pre-configured as 10 slots based on the resource pool. As may be seen from FIG. 1B, there are 5 slots between the PSFCH occasion located in the slot 7 and the PSSCH located in slot the 2, which satisfies a condition that the time interval between the PSSCH and the PSFCH occasion is less than or equal to 10 slots. The second terminal sends the HARQ information corresponding to the PSSCH on the first PSFCH occasion located in the slot 7, and the first terminal receives and decodes the HARQ information corresponding to the PSSCH sent by the second terminal on the first PSFCH occasion located in the slot 7. There are 9 slots between the PSFCH occasion located in the slot 11 and the PSSCH located in the slot 2, which satisfies a condition that the time interval between the PSSCH and the PSFCH occasion is less than or equal to 10 slots. The second terminal sends the HARQ information corresponding to the PSSCH on the second PSFCH occasion located in the slot 11, and the first terminal receives and decodes the HARQ information corresponding to the PSSCH sent by the second terminal on the second PSFCH occasion located in the slot 11. There are 13 slots between the PSFCH occasion located in the slot 15 and the PSSCH located in the slot 2, which does not satisfy the condition that the time interval between the PSSCH and the PSFCH occasion is less than or equal to 10 slots. The second terminal does not send the HARQ information corresponding to the PSSCH on the third PSFCH occasion located in the slot 15, and the first terminal does not receive and decode the corresponding HARQ information sent by the second terminal on the third PSFCH occasion located in the slot 15. Therefore, based on the time threshold, it is determined that N = 2, that is, the PSFCH occasions that is usable by the PSSCH located in the slot 2 include the first PSFCH occasion located in the slot 7 and the second PSFCH occasion located in the slot 11, and it is determined that L = 1, that is, the third PSFCH occasion located in the slot 15.

The communication methods according to the embodiments of the disclosure may include at least one of steps S2101 to S2109. For example, the step S2102 may be implemented as an independent embodiment, the step S2104 may be implemented as an independent embodiment, the step 2101 and the step 2102 may be implemented as an independent embodiment, and the step S2101, the step S2102, the step S2108 and the step S2109 may be implemented as an independent embodiment. However, the disclosure is not limited to the above. In some embodiments, the steps S2103, S2104 and S2105 may be exchanged in order or executed simultaneously, and the steps S2106 and S2107 may be exchanged in order or executed simultaneously. In some embodiments, the steps S2101, step S2103, step S2105, step S2106, step S2108 and step S2109 are optional, and one or more of these steps may be omitted or replaced in different embodiments.

In some embodiments, the steps S2101, S2103 and S2105 are optional, and one or more of these steps may be omitted or replaced in different embodiments.

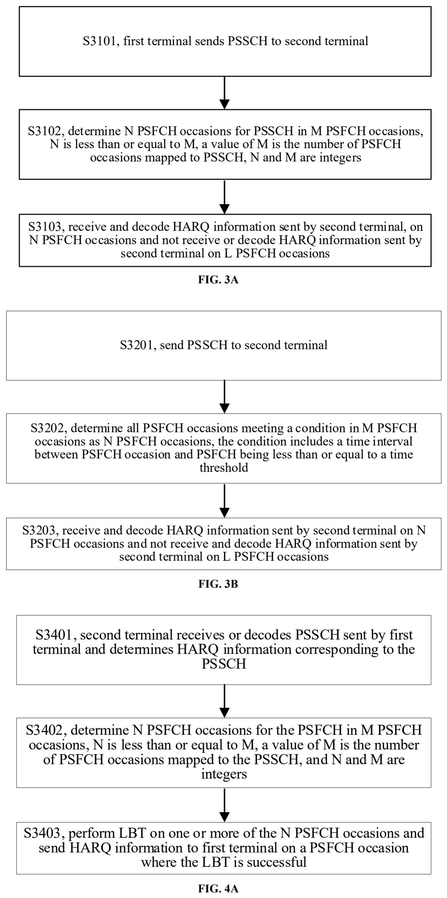

FIG. 3A is a flowchart illustrating a communication method performed by a first terminal according to an embodiment of the disclosure. As illustrated in FIG. 3A, embodiments of the disclosure relate to a communication method performed by a first terminal. The method includes:

At step S3101, the first terminal sends a PSSCH to a second terminal.

For the optional implementation of the step S3101, reference may be made to the optional implementation of step S2101 in FIG. 2A and other related parts in the embodiments involved in FIG. 2A, which will not be described in detail here.

At step S3102, the N PSFCH occasions for the PSSCH are determined from the M PSFCH occasions, where N is less than or equal to M, a value of M is a number of PSFCH occasions mapped to the PSSCH channel, and N and M are positive integers.

The N PSFCH occasions are all PSFCH occasions meeting a condition among the M PSFCH occasions, and the condition includes that the time interval between the PSFCH occasion and the PSSCH channel is less than or equal to a time threshold.

For the optional implementation of the optional implementation of the step S3102, reference may be made to the optional implementation of the step S2101 in FIG. 2A and other related parts in the embodiments involved in FIG. 2A, which will not be repeated here.

In some embodiments, the physical quantity corresponding to the time threshold includes a slot or a millisecond.

In some embodiments, the time threshold is determined in one of following ways:
being pre-defined based on a resource pool;
being pre-configured based on a resource pool; or
being indicated based on DCI and/or SCI.

In some embodiments, being pre-defined based on a resource pool may be replaced by other ways of configuring a fixed time threshold without any indication from the network.

In some embodiments, being pre-configured based on the resource pool may be replaced by other ways of configuring the time threshold based on an indication from the network.

In some embodiments, the DCI and/or the SCI may be replaced with other dynamic indications to configure the time threshold.

In some embodiments, the value of the time threshold is determined based on the priority of the PSSCH. The first priority of the PSSCH corresponds to the first time threshold, the second priority of the PSSCH corresponds to the second time threshold, the first priority is higher than the second priority, and the first time threshold is less than the second time threshold.

At step S3103, HARQ information sent by the second terminal is received and decoded on N PSFCH occasions, and the HARQ information sent by the second terminal is not received and decoded on L PSFCH occasions.

For the optional implementation of the step S3103, reference may be made to the optional implementations of the step S2106 and the step S2107 in FIG. 2A and other related parts in the embodiments involved in FIG. 2A, which will not be described in detail here.

In the embodiments of the disclosure, the step S3102 may be implemented as an independent embodiment, the step S3103 may be implemented as an independent embodiment, and the step S3102 and the step S3103 may be implemented as an independent embodiment. The disclosure is not limited to the above.

In some embodiments, the step S3101 is optional and may be omitted or replaced in different embodiments.

FIG. 3B is a flowchart illustrating a communication method performed by a first terminal according to an embodiment of the disclosure. As illustrated in FIG. 3B, embodiments of the disclosure relate to a communication method performed by a first terminal. The method includes the following.

At step S3201, PSSCH is sent to a second terminal.

At step S3202, all PSFCH occasions that meet a condition are determined among the M PSFCH occasions as the N PSFCH occasions. The condition includes that the time interval between the PSFCH occasion and the PSSCH channel is less than or equal to a time threshold.

At step S3203, the HARQ information sent by the second terminal is received and decoded on the N PSFCH occasions, and the HARQ information sent by the second terminal is not received and decoded on the L PSFCH occasions.

In an optional embodiment, for the optional implementations of the step S3201, the step S3202 and the step S3203, reference may be made to the optional implementations of the relevant steps in FIGS. 2A and 3A, and other related parts in the embodiments involved in FIGS. 2A and 3A, which will not be repeated here.

FIG. 4A is a flowchart illustrating a communication method performed by a second terminal according to an embodiment of the disclosure. As illustrated in FIG. 4A, embodiments of the disclosure relate to a communication method performed by a second terminal. The method includes the following.

At step S3401, the second terminal receives and decodes the PSSCH of the first terminal, and determines the HARQ information corresponding to the PSSCH.

At step S3402, the N PSFCH occasions for the PSSCH are determined among the M PSFCH occasions, in which N is less than or equal to M, a value of M is a number of PSFCH occasions mapped to the PSSCH, and N and M are positive integers.

At step S3403, LBT is performed on one or more PSFCH occasions among the N PSFCH occasions, and HARQ information is sent to the first terminal on the PSFCH occasions where the LBT is successfully performed.

The LBT is performed on the N PSFCH occasions, or the HARQ information is sent on the position of a first PSFCH occasion where the LBT is successfully performed at a first time among the N PSFCH occasions, and the LBT is not performed on the remaining PSFCH occasions.

For the optional implementations of the step S3401, the step S3402 and the step S3403, reference may be made to the optional implementations of the step S2103 to the step S2107 in FIG. 2A and other related parts in the embodiments involved in FIG. 2A, which will not be described in detail here.

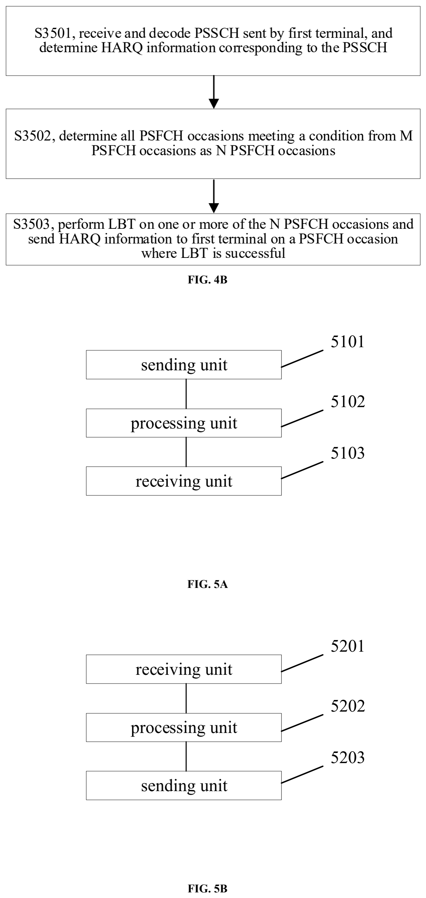

FIG. 4B is a flowchart illustrating a communication method performed by a second terminal according to an embodiment of the disclosure. As illustrated in FIG. 4B, embodiments of the disclosure relate to a communication method performed by a second terminal. The method includes the following.

At step S3501, the PSSCH sent by the first terminal is received and decoded, and the HARQ information corresponding to the PSSCH is determined.

At step S3502, all PSFCH occasions that meet the conditions are determined among the M PSFCH occasions, as the N PSFCH occasions.

The N PSFCH occasions are all PSFCH occasions that meet a condition among the M PSFCH occasions, and the condition includes that the time interval between the PSFCH occasion and the PSSCH channel is less than or equal to a time threshold.

At step S3503, the LBT is performed on one or more PSFCH occasions among the N PSFCH occasions, and the HARQ information is sent to the first terminal on the PSFCH occasion(s) where the LBT is successfully performed.

For the optional implementations of the step S3501, the step S3502 and the step S3503, reference may be made to the optional implementations of the step S2103 to the step S2107 in FIG. 2A and other related parts in the embodiments involved in FIG. 2A, which will not be described in detail here.

In the embodiments of the disclosure, the step S3502 may be implemented as an independent embodiment, the step S3503 may be implemented as an independent embodiment, and the steps S3502 and S3503 may be implemented as an independent embodiment. The disclosure is not limited to the above.

In some embodiments, the step S3501 is optional, and one or more of these steps may be omitted or replaced in different embodiments.

For example, as illustrated in FIG. 2B, taking one PSSCH supporting three PSFCH occasions as an example, the three PSFCH occasions corresponding to the PSSCH located in the slot 2 include the PSFCH occasion 1 in the slot 7, the PSFCH occasion 2 in the slot 11, and the PSFCH occasion in the slot 15. The time threshold may be pre-defined as 10 slots through the resource pool, that is, PSFCH occasion(s) separated from the PSSCH by less than or equal to 10 slots are used for the data transmission.

The PSSCH of the slot 2 is separated from the corresponding first PSFCH occasion of the slot 7 by 5 slots, which satisfies the condition that the time interval between the PSSCH and the PSFCH occasion is less than or equal to 10 slots, and the first PSFCH occasion of the slot 7 is the usable PSFCH occasion.

The PSSCH of the slot 2 is separated from the corresponding second PSFCH occasion of the slot 11 by 9 slots, which satisfies the condition that the time interval between the PSSCH and the PSFCH occasion is less than or equal to 10 slots, and the second PSFCH occasion of the slot 11 is the usable PSFCH occasion.

The PSSCH located in the slot 2 is separately from the corresponding third PSFCH occasion located in the slot 15 by 13 slots, which does not satisfy the condition that the time interval between the PSSCH and the PSFCH occasion is less than or equal to 10 slots. The third PSFCH occasion located in the slot 15 is an unusable PSFCH occasion, such that the UE determines that N = 2, and the PSFCH occasions that are useable for the feedback of the PSSCH of the slot 2 are the first PSFCH occasion located in the slot 7 and the second PSFCH occasion located in the slot 11.

In the embodiments of the disclosure, each of the above steps may be implemented as an independent embodiment.

In the embodiments of the disclosure, part or all of the steps and their optional implementations may be arbitrarily combined with part or all of the steps in other embodiments, or may be arbitrarily combined with optional implementations of other embodiments.

The embodiments of the disclosure also provide devices for implementing any of the above methods, for example, a device is provided. The above device includes units or modules for implementing each step performed by the terminal in any of the above methods. As another example, another device is provided, including units or modules for implementing each step performed by a network device (such as an access network device, a core network function node, a core network device, or the like) in any of the above methods.

It should be understood that the division of the units or modules in the above devices is only a division of logical functions, and in actual implementation, they may be fully or partially integrated into one physical entity, or they may be physically separated. In addition, the units or modules in the device may be implemented in the form of a processor calling software. For example, the device includes a processor. The processor is connected to a memory, and instructions are stored in the memory. The processor calls the instructions stored in the memory to implement any of the above methods or implement the functions of the units or modules of the above devices. The processor is, for example, a general-purpose processor, such as a central processing unit (CPU) or a microprocessor, and the memory is a memory inside the device or a memory outside the device. For example, the units or modules in the device may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. As another example, in another implementation, the above hardware circuit may be realized by a programmable logic device (PLD), taking a field programmable gate array (FPGA) as an example, which may include a large number of logic gate circuits, and the connection relationship between the logic gate circuits is configured by configuring the configuration file, to realize the functions of some or all of the above units or modules. All units or modules of the above devices may be implemented in the form of software called by the processor, in the form of hardware circuits, or in part by software called by the processor, and the rest is implemented by hardware circuits.

In the embodiments of the disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), a digital signal processor (DSP) or the like. In another implementation, the processor may implement certain functions through the logical relationship of a hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the process of loading a configuration document by the processor to implement the hardware circuit configuration may be understood as the process of loading instructions by the processor to implement the functions of some or all of the above units or modules. In addition, it may also be a hardware circuit designed for the artificial intelligence, which may be understood as an ASIC, such as a neural network processing unit (NPU), a tensor processing unit (TPU), a deep learning processing unit (DPU), or the like.

FIG. 5A is a block diagram illustrating a communication device according to an embodiment of the disclosure. As illustrated in FIG. 5A, the communication device includes the following.

A sending unit 5101 is configured to send PSSCH to a second terminal.

A processing unit 5102 is configured to determine N PSFCH occasions for the PSSCH from M PSFCH occasions, in which N is greater than or equal to 1 and less than or equal to M. A value of M is the number of PSFCH occasions mapped to the PSSCH channel, and N and M are positive integers.

A receiving unit 5103 is configured to receive and decode the HARQ information sent by the second terminal on the N PSFCH occasions.

In one implementation, the receiving unit 5103 is configured to not receive the HARQ information on L PSFCH occasions. The L PSFCH occasions are one or more PSFCH occasions among the M PSFCH occasions except the N PSFCH occasions, where L is greater than or equal to 1 and less than or equal to M, and L is a positive integer.

FIG. 5B is a block diagram illustrating a communication device according to an embodiment of the disclosure. As illustrated in FIG. 5B, the communication device includes the following.

A receiving unit 5201 is configured to receive and decode the PSSCH sent by the first terminal.

A processing unit 5202 is configured to determine N PSFCH occasions for the PSSCH from the M PSFCH occasions.

The N is greater than or equal to 1 and less than or equal to M, a value of M is the number of PSFCH occasions mapped to the PSSCH channel, the value of N is the number of PSFCH occasions that is usable by the PSSCH channel, and the N and M are positive integers.

A sending unit 5203 is configured to perform the LBT on one or more PSFCH occasions among the N PSFCH occasions and send the HARQ information of the PSSCH to the first terminal on the PSFCH occasion where LBT is successfully performed.

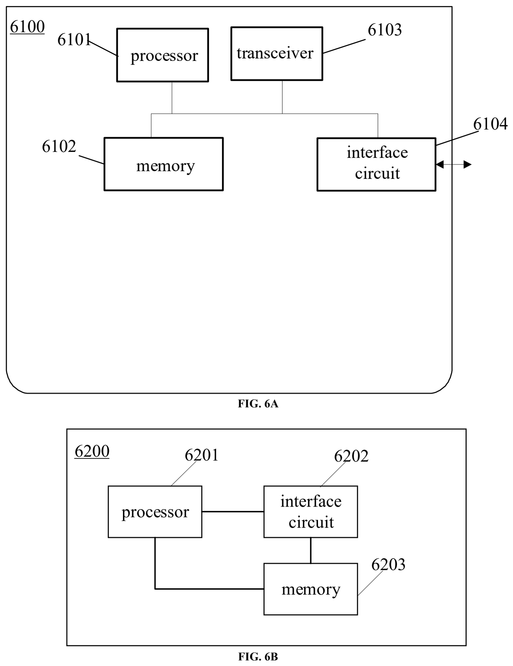

FIG. 6A is a schematic diagram illustrating a structure of a communication device 6100 according to an embodiment of the disclosure. The communication device 6100 may be a network device (e.g., an access network device, a core network device or the like), a terminal (e.g., user equipment or the like), a chip, chip system or processor that supports a network device to implement any of the above methods, or a chip, chip system or processor that supports a terminal to implement any of the above methods. The communication device 6100 may be configured to implement the methods according to the above method embodiments, and for the details, reference may be made to the description in the above method embodiments.

As illustrated in FIG. 6A, the communication device 6100 includes one or more processors 6101. The processor 6101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal, a terminal chip, a DU, a CU or the like), execute a program, and process the data of the program. The processor 6101 is configured to call instructions so that the communication device 6100 performs any of the above methods.

In some embodiments, the communication device 6100 further includes one or more memories 6102 for storing instructions. For example, all or some memories 6102 may also be outside the communication device 6100.

In some embodiments, the communication device 6100 further includes one or more transceivers 6103. In a case where the communication device 6100 includes one or more transceivers 6103, the communication steps such as sending and receiving steps in the above methods are performed by the transceiver 6103, and the other steps are performed by the processor 6101.

In some embodiments, the transceiver may include a receiver and a transmitter, and the receiver and the transmitter may be separate or integrated. For example, the terms such as "transceiver," "transceiver unit," "transceiver machine," "transceiver circuit" or the like may be used interchangeably. The terms such as "transmitter," "transmission unit," "transmitter machine," "transmission circuit" or the like may be used interchangeably. The terms such as "receiver," "receiving unit," "receiver machine," "receiving circuit" or the like may be used interchangeably.

For example, the communication device 6100 further includes one or more interface circuits 6104, which are connected to the memory 6102. The interface circuit 6104 may be configured to receive signals from the memory 6102 or other devices, and may be configured to send signals to the memory 6102 or other devices. For example, the interface circuit 6104 may read instructions stored in the memory 6102 and send the instructions to the processor 6101.

The communication device 6100 according to the above embodiments may be a network device or a terminal, but the scope of the communication device 6100 according to the disclosure is not limited thereto, and the structure of the communication device 6100 may not be limited by FIG. 6A. The communication device may be an independent device or may be part of a larger device. For example, the communication device may be: (1) an independent integrated circuit IC, a chip, a chip system or a subsystem; (2) an IC collection including one or more ICs, for example, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others.

FIG. 6B is a schematic diagram illustrating a structure of a chip 6200 according to an embodiment of the disclosure. In a case where the communication device 6100 may be a chip or a chip system, reference may be made to the schematic diagram of the structure of the chip 6200 illustrated in FIG. 6B, which is not limited in the disclosure.

The chip 6200 includes one or more processors 6201, and the processor 6201 is configured to call instructions such that the chip 6200 performs any of the above methods.

In some embodiments, the chip 6200 further includes one or more interface circuits 6202, which are connected to the memory 6203. The interface circuit 6202 may be configured to receive signals from the memory 6203 or other devices, and the interface circuit 6202 may be configured to send signals to the memory 6203 or other devices. For example, the interface circuit 6202 may read instructions stored in the memory 6203 and send the instructions to the processor 6201. For example, the terms such as "interface circuit," "interface," "transceiver pin" and "transceiver" may be used interchangeably.

In some embodiments, the chip 6200 further includes one or more memories 6203 for storing instructions. For example, all or some memories 6203 may be outside the chip 6200.

The disclosure also provides a storage medium, on which instructions are stored, and when the instructions are executed on the communication device 6100, the communication device 6100 is configured to perform any of the above methods. For example, the storage medium is an electronic storage medium. For example, the storage medium is a computer-readable storage medium, and it may also be a storage medium readable by other devices. For example, the storage medium may be a non-transitory storage medium, and it may also be a temporary storage medium.

## Claims

1. A communication method, performed by a first terminal, the method comprising:
sending a physical sidelink shared channel (PSSCH) to a second terminal;
determining N physical sidelink feedback channel (PSFCH) occasions for the PSSCH in M PSFCH occasions, wherein N is greater than or equal to 1 and less than or equal to M, a value of M is a number of PSFCH occasions mapped to the PSSCH, and N and M are positive integers; and
receiving and decoding hybrid automatic repeat request (HARQ) information corresponding to the PSSCH sent by a second terminal, on the N PSFCH occasions.

2. The method of claim 1, wherein
a time interval between any one of the N PSFCH occasions and the PSSCH is less than or equal to a time threshold.

3. The method of claim 2, wherein determining the N PSFCH occasions for the PSSCH in the M PSFCH occasions comprises:
determining the N PSFCH occasions based on the time threshold and the M PSFCH occasions.

4. The method of claim 2 or 3, further comprising:
not expecting to receive and decode the HARQ information sent by the second terminal on L PSFCH occasions, wherein the L PSFCH occasions are one or more PSFCH occasions among the M PSFCH occasions except the N PSFCH occasions, and the L is greater than or equal to 1 and less than or equal to M.

5. The method of any one of claims 2 to 4, wherein the time threshold is determined in one of following ways:
being pre-defined based on a resource pool;
being pre-configured based on a resource pool; or
being indicated based on downlink control information and/or sidelink control information.

6. The method of any one of claims 2 to 5, wherein a value of the time threshold is determined based on a priority of the PSSCH; and
a first priority of the PSSCH corresponds to a first time threshold, a second priority of the PSSCH corresponds to a second time threshold, the first priority is higher than the second priority, and the first time threshold is less than the second time threshold.

7. A communication method, performed by a second terminal, comprising:
receiving a physical sidelink shared channel (PSSCH) sent by a first terminal;
determining N physical sidelink feedback channel (PSFCH) occasions for the PSSCH in M PSFCH occasions, wherein N is greater than or equal to 1 and less than or equal to M, a value of M is a number of PSFCH occasions mapped to the PSSCH, and N and M are positive integers; and
performing listen-before-talk (LBT) on one or more PSFCH occasions among the N PSFCH occasions, and sending hybrid automatic repeat request (HARQ) information corresponding to the PSSCH to the first terminal on a PSFCH occasion where the LBT is successfully performed.

8. The method of claim 7, wherein a time interval between any one of the N PSFCH occasions and the PSSCH is less than or equal to a time threshold.

9. The method of claim 8, wherein determining the N PSFCH occasions for the PSSCH in the M PSFCH occasions comprises:
determining the N PSFCH occasions based on the time threshold, the M PSFCH occasions and the PSFCH occasion.

10. The method of any one of claims 8 or 9, wherein the HARQ information is not sent on L PSFCH occasions, the L PSFCH occasions are one or more PSFCH occasions among the M PSFCH occasions except the N PSFCH occasions, L is greater than or equal to 1 and less than or equal to M, and the L is a positive integer.

11. The method of any one of claims 8 to 10, wherein the time threshold is determined in one of following ways:
being pre-defined based on a resource pool;
being pre-configured based on a resource pool; or
being indicated based on downlink control information and/or sidelink control information.

12. The method of any one of claims 7 to 11, wherein a value of the time threshold is determined based on a priority of the PSSCH, a first priority of the PSSCH corresponds to a first time threshold, a second priority of the PSSCH corresponds to a second time threshold, the first priority is higher than the second priority, and the first time threshold is less than the second time threshold.

13. A communication device, comprising:
a sending unit, configured to send physical sidelink shared channel (PSSCH) to a second terminal;
a processing unit, configured to determine N physical sidelink feedback channel (PSFCH) occasions for the PSSCH in M PSFCH occasions, wherein N is greater than or equal to 1 and less than or equal to M, a value of M is a number of PSFCH occasions mapped to the PSSCH, and N and M are positive integers; and
a receiving unit, configured to receive and decode hybrid automatic repeat request (HARQ) information corresponding to the PSSCH sent by the second terminal, on the N PSFCH occasions.

14. A communication device, comprising:
a receiving unit, configured to receive and decode physical sidelink shared channel (PSSCH) sent by a first terminal;
a processing unit, configured to determine N physical sidelink feedback channel (PSFCH) occasions for the PSSCH among M PSFCH occasions, wherein N is greater than or equal to 1 and less than or equal to M, a value of M is a number of PSFCH occasions mapped to the PSSCH, a value of N is a number of PSFCH occasions that are usable by the PSSCH, and N and M are positive integers; and
a sending unit, configured to perform listen-before-talk (LBT) on one or more of the N PSFCH occasions and to send hybrid automatic repeat request (HARQ) information corresponding to the PSSCH to the first terminal on a PSFCH occasion where the LBT is successfully performed.

15. A communication device, comprising:
a processor and a memory configured to store instructions executable by the processor;
wherein the processor is configured to perform the communication method of any one of claims 1 to 6 or perform the communication method of any one of claims 6 to 10.

16. A storage medium, having instructions stored therein, wherein when the instructions in the storage medium are executed by a processor of a first terminal, the first terminal is enabled to perform the communication method according to any one of claims 1 to 6, or when the instructions in the storage medium are executed by a processor of a second terminal, the second terminal is enabled to perform the communication method according to any one of claims 7 to 12.
